# EUROPEAN PATENT SPECIFICATION

(11) **EP 0 287 682 B1**
(45) Date of publication and mention of the grant of the patent: **08.06.1994**
(21) Application number: 87906947.4
(22) Date of filing: 27.10.1987
(51) Int. Cl.: H04N 9/80

(54) **APPARATUS FOR MAGNETICALLY RECORDING AND REPRODUCING VIDEO SIGNALS**
EINRICHTUNG ZUR MAGNETISCHEN AUFZEICHNUNG UND WIEDERGABE VON VIDEO-SIGNALEN
APPAREIL D'ENREGISTREMENT MAGNETIQUE ET DE REPRODUCTION DE SIGNAUX VIDEO

(30) Priority: 28.10.1986 JP 257362/86
(43) Date of publication of application: 26.10.1988
(73) Proprietor: MITSUBISHI DENKI KABUSHIKI KAISHA, Tokyo 100 (JP)
(72) Inventor: FUJIWARA, N Mitsubishi Denki Kabushiki Kaisha, 1, Babazusho Nagaokakyo-shi Kyoto 617 (JP)
(74) Representative: Calderbank, Thomas Roger
(86) International application number: PCT/JP87/00827
(87) International publication number: WO 88/03348

(56) References cited:
- EP-A- 0 154 221
- JP-A-54 102 918
- JP-U- 625 775
- PATENT ABSTRACTS OF JAPAN, vol. 6, no. 185 (E-132)[1063], 21st September 1982 & JP-A-57 99 871

## Description

The present invention relates to the discrimination of an FM carrier frequency in a video signal magnetic recording and/or reproducing apparatus (hereinafter referred to as VCR).

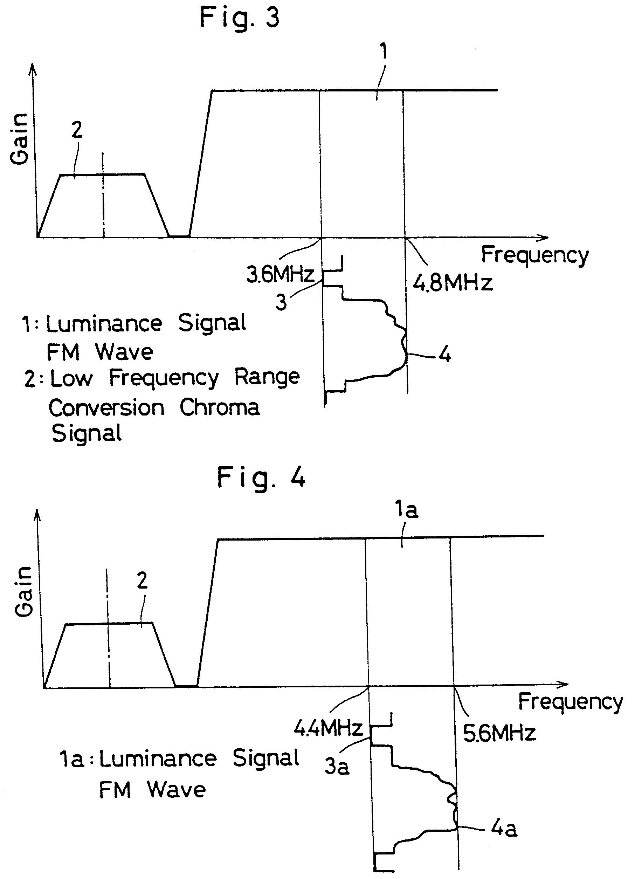

Fig. 3 illustrates a frequency allocation for the standard mode described in a handling manual of, for example, the VCR of Sony make, HF-900 (hereinafter referred to as the conventional apparatus), where in 1 represents a luminance signal FM wave, 2 represents a low frequency range conversion chroma signal, 3 represents an FM carrier frequency (3.6 MHz) of a sync signal tip, and 4 represents an FM carrier wave (4.8 MHz) of a white peak. Fig. 4 illustrates a frequency allocation of a high band mode, wherein 1a represents a luminance signal FM wave of the high band mode, 3a represents an FM carrier frequency (4.4 MHz) of a sync signal tip, and 4a represents an FM carrier frequency (5.6 MHz) of a white peak.

In the above described conventional apparatus, according to the standard mode, at the luminance signal FM wave 1, the FM carrier frequency 3 of the sync signal tip is 3.6 MHz, and the FM carrier frequency 4 of the white peak is 4.8 Mhz. On the other hand, according to the high band mode, the FM carrier frequency 3a of the sync signal tip is 4.4 MHz and the FM carrier frequency 4a of the white peak is 5.6MHz.

Although in the VCR the frequency characteristics of the FM wave must be modified where the carrier frequency of the luminance signal FM wave is to be changed, the conventional apparatus is so designed that the frequency characteristics of the reproduced FM wave are modified by verifying a reproduced image on a monitor TV with sight and then by manually operating a change-over switch. Accordingly, it may happen that at the high band mode the change-over switch may be connected to the standard mode position, and in that case, there has been a problem in that the reproduced image tends to be disturbed.

EP-A-0154221, describes a video signal reproducing circuit for a video tape recorder for reproducing two video signals from a tape. The first video signal has a centre signal. In EP-A-0154221, output frequencies of each vertical sync signal were detected for the first video signal and used to generate a wave detected output. A hold circuit then held that output until the next vertical sync signal. Such an arrangement is dependent on accurate detection of the vertical sync signal and failure to detect that signal, e.g. due to drop-out, may result in eronous operation.

Therefore, according to a first aspect of the present invention there is provided a video signal magnetic recording/reproducing apparatus having a mode discriminating circuit which automatically discriminates the original recording of a reproduced luminance signal FM wave in a standard mode or a high band mode, wherein the circuit includes:
a bandpass filter, coupled to said reproduced luminance signal FM Wave and of a selected bandpass, passing as a bandpass filter output frequencies in the vicinity of each horizontal sync signal tip portion of the reproduced luminance signal FM wave only for said standard mode;
an envelope wave detecting circuit, coupled to the bandpass filter, providing a wave detected output corresponding to each horizontal sync signal tip portion in accordance with said bandpass filter output; and
a hold circuit coupled to said envelope wave detecting circuit, said hold circuit being arranged to hold said wave detected output corresponding to each horizontal sync signal tip portion so as to provide discrimination signals of a high level indicative of said standard mode and of a low level indicative of said high band mode.

According to a second aspect of the present invention there is provided a method of discriminating an original recording of a reproduced luminance signal FM wave in a standard mode or a high band mode in a magnetic recording/reproducing apparatus; the method comprising:
passing, as a band pass filter output, frequencies of said reproduced luminance signal FM wave in the vicinity of each horizontal sync signal tip portion only for said standard mode;
detecting said bandpass filter output to provide a wave detected output corresponding to each horizontal sync signal tip portion; and
holding said wave detected output corresponding to each horizontal sync signal tip portion and providing discrimination signals of a high level indicative of said standard mode and of a low level indicative of said high band mode.

Embodiments of the present invention will now be described in detail, by way of example, with reference to the accompanying drawings, in which:
Fig. 1 is a block circuit diagram showing a construction for the mode discrimination of the VCR according to one embodiment of the present invention; Fig. 2 is a diagram showing waveforms of signals in various circuits in the embodiment of the present invention; Fig. 3 is a diagram showing the frequency allocation for the standard mode in the VCR; and Fig. 4 is a diagram showing the frequency allocation for the high band mode.

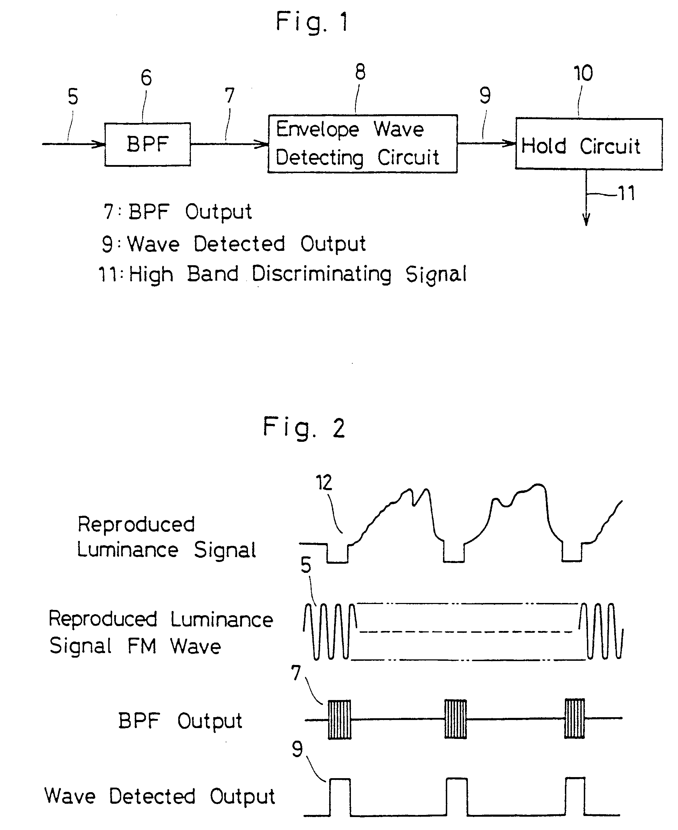

Hereinafter, one embodiment of the present invention will be described with reference to the drawings. In Fig. 1, reference numeral 5 represents a reproduced luminance signal FM wave, and reference numeral 6 represents a bandpass filter (BPF), the bandpass range of which is so selected as to permit only a frequency in the vicinity of the sync signal tip portion of the reproduced luminance signal FM wave to pass therethrough. Reference numeral 7 represents a BPF output, reference numeral 8 represents an envelope wave detecting circuit, reference numeral 9 represents a wave detected output, reference numeral 10 represents a hold circuit, and reference numeral 11 represents a high band discriminating signal. Also, Fig. 2 illustrates respective waveform of various signals appearing in the above mentioned portions and, in this drawing, 12 represents a reproduced luminance signal.

The operation will be hereinafter described.

By the BPF 6 through which only the frequency in the vicinity of the sync signal tip portion of the luminance signal FM wave for the standard mode passes, the BPF output 7 of the sync signal tip portion of the reproduced luminance signal FM wave 5 can be obtained during the standard mode. On the other hand, since during the high band mode there is no frequency component that passes through the BPF 6, no signal appears in the BPF output 7 (See Figs. 3 and 4). In the event that there is the BPF output 7 (during the standard mode), the wave detection is carried out by the envelope detecting circuit 8 to obtain the wave detected output 9. This signal is held in the hold circuit 10 for one horizontal period to give the high band discriminating signal 11. This high band discriminating signal 11 is in a high level during the standard mode, but in a low level during the high band mode.

Accordingly, in such embodiment, with the simple and inexpensive apparatus such as the BPF and the wave detecting circuit, the precise high band mode discrimination can be carried out, and by the utilization of the result of this discrimination, the mode changeover can be automatically carried out.

It is to be noted that although in the foregoing embodiment arrangement has been made that the discrimination is carried out in each horizontal synchronizing signal portion, the discrimination may instead be done only during a period of a vertical synchronizing signal.

The present invention can be applicable not only to the VCR, but also any magnetic recording and/or reproducing apparatus wherein the high band mode is automatically discriminated in reference to a level of the FM wave at a frequency in the vicinity of a tip portion of the synchronizing signal.

## Claims

1. A video signal magnetic recording/reproducing apparatus having a mode discriminating circuit which automatically discriminates the original recording of a reproduced luminance signal FM wave (5) in a standard mode or a high band mode, wherein the circuit includes:
a bandpass filter (6), coupled to said reproduced luminance signal FM Wave (5) and of a selected bandpass, passing as a bandpass filter output frequencies in the vicinity of each horizontal sync signal tip portion of the reproduced luminance signal FM wave only for said standard mode;
an envelope wave detecting circuit (8), coupled to the bandpass filter (6), providing a wave detected output corresponding to each horizontal sync signal tip portion in accordance with said bandpass filter output; and
a hold circuit (10) coupled to said envelope wave detecting circuit (8), said hold circuit (10) being arranged to hold said wave detected output corresponding to each horizontal sync signal tip portion so as to provide discrimination signals of a high level indicative of said standard mode and of a low level indicative of said high band mode.

2. A method of discriminating an original recording of a reproduced luminance signal FM wave in a standard mode or a high band mode in a magnetic recording/reproducing apparatus; the method comprising:
passing, as a band pass filter output, frequencies of said reproduced luminance signal FM wave in the vicinity of each horizontal sync signal tip portion only for said standard mode;
detecting said bandpass filter output to provide a wave detected output corresponding to each horizontal sync signal tip portion; and
holding said wave detected output corresponding to each horizontal sync signal tip portion and providing discrimination signals of a high level indicative of said standard mode and of a low level indicative of said high band mode.

## Patentansprüche

1. Videosignal-Magnetaufzeichnungs/wiedergabegerät mit einer Modediskriminierungsschaltung, die die ursprüngliche Aufzeichnung eines reproduzierten FM-Wellen-Luminanzsignals (5) in einem Standardmode oder einem Hochbandmode automatisch diskriminiert, worin die Schaltung umfaßt:
ein an das genannte reproduzierte FM-Wellen-Luminanzsignal (5) gekoppeltes Bandpaßfilter (6) mit einem ausgewählten Durchlaßbereich, das als Bandpaßfilter-Output Frequenzen in der Nähe eines jeden horizontalen Synchronisierungssignalspitzenabschnitts des reproduzierten FM-Wellen-Luminanzsignals nur für den genannten Standardmode durchläßt;
eine an das Bandpaßfilter (6) gekoppelte Hüllkurvendetektorschaltung (8), die einen Output in Abhängigkeit von der detektierten Welle erzeugt, der jedem horizontalen Synchronisierungssignalspitzenabschnitt in Übereinstimmung mit dem genannten Bandpaßfilteroutput entspricht; und
eine an die genannte Hüllkurvendetektorschaltung (8) gekoppelte Halteschaltung (10), wobei die genannte Halteschaltung (10) so angeordnet ist, daß sie den genannten von der detektierten Welle abhängigen Output entsprechend jedem horizontalen Synchronisierungsspitzenabschnitt hält, um Diskriminierungssignale mit High-Pegel als Indikator für den genannten Standardmode und mit Low-Pegel als Indikator für den genannten Hochbandmode zu schaffen.

2. Verfahren zur Diskriminierung einer ursprünglichen Aufzeichnung eines reproduzierten FM-Wellen-Luminanzsignals in einem Standardmode oder einem Hochbandmode in einem Gerät zur Magnetaufzeichnung/-wiedergabe; wobei das Verfahren umfaßt:
das Durchlassen von Frequenzen des genannten reproduzierten FM-Wellen-Luminanzsignals in der Nähe eines jeden horizontalen Synchronisierungssignalspitzenabschnitts als Bandpaßfilter-Output nur für den genannten Standardmode;
das Detektieren des genannten Bandpaßfilter-Outputs, um einen Output in Abhängigkeit von der detektierten Welle zu schaffen, der jedem horizontalen Synchronisierungssignalspitzenabschnitt entspricht; und
das Halten des genannten von der detektierten Welle abhängigen Outputs, der jedem horizontalen Synchronisierungssignalspitzenabschnitt entspricht, und das Erzeugen von Diskriminierungssignalen mit High-Pegel als Indikator für den genannten Standardmode und mit Low-Pegel als Indikator für den genannten Hochbandmode.

## Revendications

1. Appareil d'enregistrement/reproduction magnétique des signaux vidéo ayant un circuit de discrimination de modes qui discrimine automatiquement l'enregistrement d'origine d'une onde FM (5) de signal de luminance reproduit dans un mode standard ou un mode de bande élevée, dans lequel le circuit comprend:
un filtre passe bande (6), couplé à ladite onde FM (5) de signal de luminance reproduit et de passe bande choisi, laissant passer les fréquences de sortie du filtre passe bande au voisinage de chaque portion de pointe de signal de synchronisation horizontale de l'onde FM de signal de luminance reproduit seulement pendant ledit mode standard;
un circuit de détection d'onde d'enveloppe (8), couplé au filtre passe bande (6), produisant une sortie d'onde détectée correspondant à chaque portion de pointe du signal de synchronisation horizontale selon la sortie du filtre passe bande; et
un circuit de maintien (10) couplé au circuit de détection d'enveloppe (8), ledit circuit de maintien (10) étant agencé pour maintenir ladite sortie détectée d'onde correspondant à chaque portion de pointe du signal de synchronisation horizontale afin de produire des signaux de discrimination d'un niveau élevé représentatifs dudit mode standard et d'un niveau bas représentatif dudit mode de bande élevée.

2. Procédé pour discriminer un enregistrement d'origine d'une onde FM de signal de luminance reproduit dans un mode standard ou un mode de bande élevée dans un appareil d'enregistrement/reproduction magnétique; le procédé comprenant :
laisser passer, comme sortie du filtre passe bande, des fréquences de l'onde FM du signal de luminance reproduit au voisinage de chaque portion de pointe du signal de synchronisation horizontale seulement pendant ledit mode standard;
détecter la sortie du filtre passe bande pour produire une sortie détectée d'onde correspondant à chaque portion de pointe du signal de synchronisation horizontale; et
maintenir ladite sortie détectée d'onde correspondant à chaque portion de pointe du signal de synchronisation horizontale pour produire des signaux de discrimination d'un niveau élevé représentatifs du mode standard et d'un niveau bas représentatifs du mode de bande élevée.
